# EUROPEAN PATENT APPLICATION

(11) **EP 4 637 106 A1**
(43) Date of publication of application: **22.10.2025**
(21) Application number: 25170595.0
(22) Date of filing: 15.04.2025
(51) Int. Cl.: H04L 47/125, H04L 47/12, H04L 45/02, H04L 45/24

(54) **SYSTEMS AND METHODS FOR REDUCING CONGESTION IN TRANSMITTING FLOWS OF COMMUNICATION COLLECTIVES**

(30) Priority: 15.04.2024 US 202463634202 P; 30.09.2024 US 202418902521
(71) Applicant: Arista Networks, Inc., Santa Clara, CA 95054 (US)
(72) Inventor: EMMONS, Thomas Benjamin, Santa Clara, CA, 95054 (US); MCCLOGHRIE, Ian, Santa Clara, CA, 95054 (US); HOLBROCK, Hugh Weber, Santa Clara, CA, 95054 (US)
(74) Representative: Hoffmann Eitle

(57) **Abstract**

A network device such as a top-of-rack (TOR) switch receives communication flows for communication collectives from source devices and determines, by importing from the source devices or snooping from the communication traffic, topology information of the communication flows. For each communication collective, the TOR switch determines, based at least in part on the topology information, groups of communication flows that are correlated in time and in destination. For each respective group, the TOR switch pins each communication flow in the respective group to a corresponding network link connected to the TOR switch so that the communication flows in the respective group are evenly distributed across network links connected to the TOR switch.

## Description

### CROSS-REFERENCE TO RELATED APPLICATION(S)

This application is a conversion of, and claims a benefit of priority under35 U.S.C. § 119(e) from, U.S. Provisional Application No. 63/634,203, filed April 15, 2024, entitled "SYSTEMS AND METHODS FOR REDUCING CONGESTION IN TRANSMITTING FLOWS OF COMMUNICATION COLLECTIVES," the entire content of which is fully incorporated by reference herein for all purposes.

### TECHNICAL FIELD

The disclosed embodiments relate generally to network communications and, more particularly, to systems and methods for preventing congestion when transmitting flows of communication collectives from a source switch via a set of links to network routers.

### BACKGROUND OF THE RELATED ART

Many distributed computing applications use network primitives called collectives, typically implemented in collective communication libraries, to organize communication across a number of network nodes (referred to herein as "nodes"). For example, in a number of different types of applications such as Artificial Intelligence (Al) training applications, tasks are distributed across many nodes, and collective communication libraries are used to coordinate tasks that are performed in parallel.

A job comprises coordinated operations and communications from multiple nodes in a network. In some cases, a single job can have multiple different collectives. Here, the term "collective" refers to a specific instance of coordinated communication within a job. Within each collective, all nodes will begin transmitting with a given communication pattern at nearly the same time and finish together. The communications for each collective typically follows one of a well-known set of topologies that remain consistent for the duration of a job. The term "topology" generally refers to the way in which constituent parts are interrelated or arranged. In networking, the term "topology" (or "network topology") refers to the physical and logical arrangement of the elements (e.g., links, nodes, etc.) of a communication network. The nodes represent networking devices such as switches, routers, or software with switching/routing features, etc. The links represent physical or logical connections between those networking devices.

The communications for the collectives can be characterized as a set of "flows." Here, a "flow" refers to a subset of the communication traffic that is transmitted from one location to another location and, more specifically, traffic from a specific source node to a specific destination node (e.g., a job running an AI training application on multiple nodes requires sending data from the source node to the destination node). One collective may include more than one flow between the same pair of nodes. One of the significant properties of a flow is that, from a practical standpoint, all the packets in a given flow need to follow the same path in the network - otherwise, the transport protocol performance is very poor. For example, if a flow were split and sent to the destination on multiple, different paths, the packets may arrive out of order, which could severely reduce the performance by increasing the total transfer time of the flow and the amount of data that is transmitted.

Conventionally, many of the flows are directed to their respective destinations by distributing (or "hashing") the flows across shared links within a network according to a function that mixes or "hashes" a subset of the flow's fixed header fields to choose a next hop. This hashing of the flows is known in the art to result in poor performance. Alternatively, some systems take a single flow and attempt to spread the packets belonging to it across many links in the network. This approach can work well, but it requires specific support in the Network Interface Card (NIC) hardware for both the sender (source) and receiver (destination). Without this support, this approach cannot be successfully implemented due to the aforementioned problems associated with packets arriving out of order. Other alternative approaches can use information about the existing congestion on links connected to the sender to identify the least congested links and to assign new flows to the least congested links. In this approach, however, only information about the first-hops in the potential paths for the flow is known, so it cannot account for congestion in subsequent links, so it cannot ensure good performance for all flows.

It is important in communicating flows of a collective across the network to ensure good transport performance because of the tail-latency of the communications. Within a given collective, all nodes will begin transmitting data for a given communication pattern at nearly the same time and will finish together, in the absence of network congestion and loss. If the data transmitted by one node suffers a different degree of congestion that reduces transport performance and therefore increases transfer time more than the data transmitted by another node, the data transmitted by each node may have a different latency. In this case, the communication by the collective (which includes the data from both of these nodes) is not complete until the last transfer is complete. "Tail-latency" refers to the fact that the latency of the collective, as a whole, is dependent upon the latency of the last flow to be received. Thus, the performance of the last node to finish can affect the performance of the communication collective, as well as any application that relies on the tail-latency of the communication.

It would therefore be desirable to provide techniques for transporting the flows of the collective in a manner that does not adversely affect transport performance and that does not incur undue cost or complexity in the servers or NICs.

Embodiments and the various features and advantageous details thereof are explained more fully with reference to the non-limiting embodiments that are illustrated in the accompanying drawings and detailed in the following description. Descriptions of well-known starting materials, processing techniques, components and equipment are omitted so as not to unnecessarily obscure the embodiments in detail. It should be understood, however, that the detailed description and the specific examples are given by way of illustration only and not by way of limitation. Various substitutions, modifications, additions and/or rearrangements within the spirit and/or scope of the underlying inventive concept will become apparent to those skilled in the art from this disclosure.

### BRIEF DESCRIPTION OF DRAWINGS

The drawings accompanying and forming part of this specification are included to depict certain aspects of the disclosure. It should be noted that the features illustrated in the drawings are not necessarily drawn to scale. A more complete understanding of the disclosure and the advantages thereof may be acquired by referring to the following description, taken in conjunction with the accompanying drawings in which like reference numbers indicate like features.
FIG. 1 is a diagram that illustrates an example of a leaf-spine topology.
FIG. 2 is a diagram that illustrates, at a high level, an example of the structure of a network switch according to some embodiments disclosed herein.
FIG. 3 is a diagram that illustrates a scenario based on a prior approach in which flows are assigned to paths based on an existing congestion on links connected to source top-of-rack switches.
FIG. 4 is a high level diagram that illustrates an example of a method for reducing congestion in transmitting flows in a collective, according to some embodiments disclosed herein.
FIG. 5 is a flow diagram that illustrates a method for pinning communication flows to links of a network switch in accordance with some embodiments disclosed herein.
FIGS. 6A-6B are diagrams that together illustrate an example of forwarding communication flows after they have been evenly distributed across available links, in accordance with some embodiments disclosed herein.

### DETAILED DESCRIPTION

Specific embodiments will now be described with reference to the accompanying figures (FIGS). The figures and the following description describe certain embodiments by way of illustration only. One skilled in the art will readily recognize from the following description that alternative embodiments of the structures and methods illustrated herein may be employed without departing from the principles described herein. It is noted that wherever practicable similar or like reference numbers may be used in the figures and may indicate similar or like functionality.

As alluded to above, conventionally, many of the flows are directed to their respective destinations by distributing (or "hashing") the flows across shared links within a network according to a function that mixes or "hashes" a subset of the flow's fixed header fields so as to choose a next hop. Alternatively, some systems take each flow and attempt to spread it across the whole network. In this approach, packets from a single flow are forwarded so as to use all viable paths to the destination.

The former approach, which leverages hashing of the flows, is known to result in poor performance. The latter approach, which utilizes all viable paths to forward packets from a single flow to the destination, can achieve even utilization of the network, but it requires specific support in the NIC hardware for both the sender (source) and the receiver (destination). Without this support, this approach cannot be successfully implemented. Moreover, this support may necessitate special purpose logic on the sender and the receiver, as well as cost for additional memory and processing capabilities in the NIC hardware. In some implementations, cost is reduced by tolerating only a limited amount of reordering, but with reduced performance.

Other alternative approaches can involve choosing a path that a flow takes by taking into account the local knowledge of utilization on immediately-connected links for each viable path. In this approach, a newly-seen flow is assigned to take a path using either the least congested or an under-utilized next-hop link. In this approach, however, since only information about utilization of the next-hop links is used, it cannot account for congestion in subsequent links on the path, and it cannot ensure good performance for all flows. However, because the fixed headers are determined without consideration of the hashing or load balancing in the network, and the hashing is performed without consideration of or knowledge of the way in which the fixed headers are assigned, an approach such as the above in practice frequently results in uneven utilization of the network. In particular, when the overall network usage is high, some links are overutilized while other links are underutilized. This problem is magnified when the number of flows originating from a given endpoint is small, as is often the case with collective communications.

This disclosure provides systems and methods for avoiding network congestion when transmitting flows of communication collectives. A network switch determines the flows and flow topologies associated with one or more collectives transmitted via the switch. For each collective, the switch identifies groups of flows, where the flows in each group have a common source and a common destination. The flows in the group are therefore correlated in destination and are likewise correlated in time. For each group, the switch pins each flow to a corresponding link (e.g., an uplink or a downlink) so that the flows in each group are evenly spread across the links from the switch to the network. The even distribution of the flows across the links prevents congestion when transmitting the flows from the switch to the network (e.g., spine routers) and, by the same token, prevents congestion when transmitting the flows from the network routers to the destination switch.

The disclosed systems and methods for collective load balancing take advantage of the fact that collectives have many flows that occur together (e.g., flows that always or nearly always occur together). When each of these flows (e.g., flows that share a single collective) is properly assigned or "pinned" to communication links, embodiments disclosed herein can ensure that network congestion is not created for any of the collectives. Alternatively, the network device can simply monitor traffic flow without redirecting packets in order to learn the collectives in use within a network and provide visibility of them.

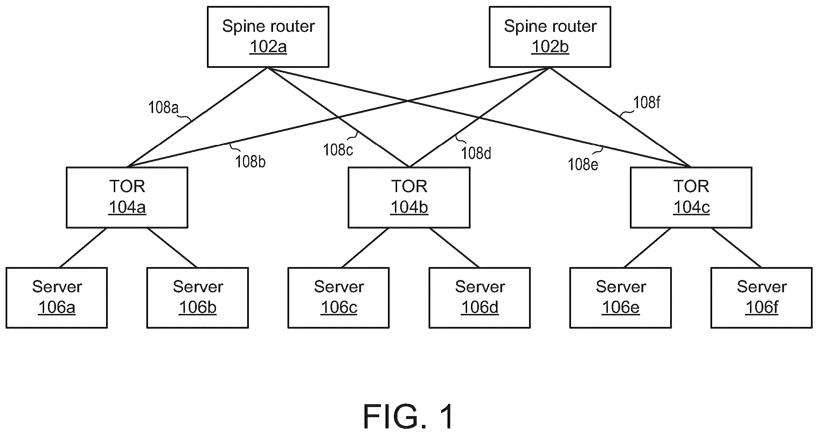

Before describing details of the embodiments disclosed herein, an overview of a leaf-spine topology may be helpful. FIG. 1 shows an example of a leaf-spine topology. Leaf-spine, or spine-leaf, is a network architecture with a spine switching layer and a leaf switching layer. As shown in FIG. 1, spine switches or routers 102a-102b reside at the spine switching layer and, at the leaf switching layer, top-of-rack (TOR) switches 104a-104c are connected by communication links to the spine routers 102a-102b. Each of TOR switches 104a-104c has a corresponding set of servers 106a-106b connected thereto. Server machines may contain compute accelerators such as graphical processing units (GPUs). In some cases, the spine routers can perform Layer 3 (L3) routing with high port density to allow for scalability. TOR switches (collectively referred to herein as TORs) are used in scenarios such as storage and server access in data centers. Spine routers and TORs are known to those skilled in the art and thus are not further described herein.

In some embodiments, the TOR switch may instead be generalized to any first-hop switch that may physically reside in the middle of row, end of row, or elsewhere. In this design, a server can connect to one or more first hop switches. The methods and techniques below apply equally to this topology, it should be noted, but in the following description it should be understood that the term TOR could apply to any of these cases.

It should be noted that different instances of the same or similar devices may be identified herein by a common reference number followed by a letter. For instance, as depicted in FIG. 1, this system includes spine routers 102a-102b. An individual one of the spine routers may be referred to by the corresponding number and letter (e.g., 102a), or the group of spine routers may be referred to collectively by the number alone (e.g., spine routers 102). One of the devices may also be referred to individually but generically (e.g., if it is not important which of the devices is considered, or if the reference applies to each of the devices individually) by the number alone (e.g., spine router 102).

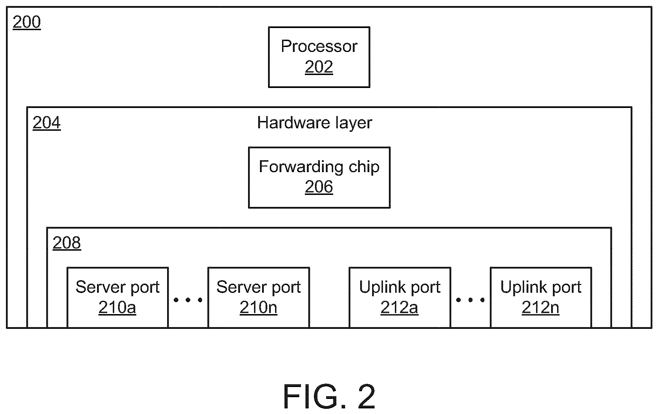

Referring to FIG. 2, a diagram is shown to illustrate, at a high level, the structure of a network switch 200, which may be used as a TOR as shown in FIG. 1. Network switch 200 includes a processor 202 and a hardware layer 204. Hardware layer 204 includes a forwarding chip 206 and a set of ports 208. The set of ports includes a set of server ports 210a ... 210n that are connected to servers below the network switch and a set of ports 212a ... 212n that are connected to corresponding network links.

Server ports 210 are configured to receive communication flows that are generated by the servers which are connected to the ports. The packets of the communication flows are processed by forwarding chip 206 and are forwarded to ones of ports 212 that correspond to the network links to which the communication flows associated with the respective packets are pinned. The packets of the communication flows are then transmitted via the network links to corresponding destinations (e.g., to destination TORs via spine routers as shown in FIG. 1). Note that packets are not always pinned. For instance, in an overflow scenario, some of the flows may not be pinned (e.g., due to a hardware limitation).

Referring again to FIG. 1, traffic generated by each of servers 106 is transmitted to the corresponding TOR 104 to which the server 106 is connected, and the traffic is then transmitted via one or more links to one or more of the spine routers 102 to which the TOR 104 is connected. In some embodiments the routing protocol in use may determine that some of the links are Equal Cost Multi-Path (ECMP) options to reach a destination server 106. The traffic is then sent by way of downlinks from spine routers 102 to the appropriate ones of TORs 104, and the traffic is sent from the TORs 104 to the destination servers 106. It is assumed, as a non-limiting example, that all of the links between spine routers 102 and TORs 104 have the same maximum bandwidth.

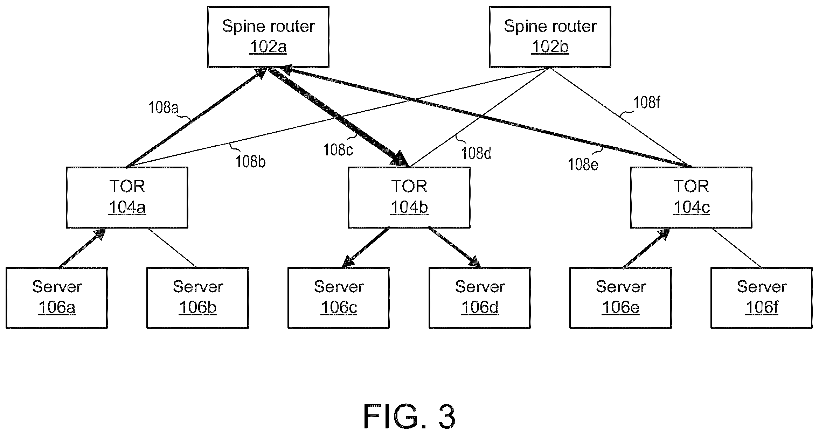

Referring to FIG. 3, an example of a system that leverages a leaf-spine topology is shown. The leaf-spine topology is described above with reference to FIG. 1. In this example, a first set of flows from a first source server 106a are transmitted to a destination server 106c. A second set of flows from a second source server 106e to destination server 106d are also shown. In this Figure, we refer to TORs 104a and 104c as source TORs (connected to the source servers) and TOR 104b as the destination TOR (connected to the destination server).

The example of FIG. 3 illustrates a scenario in which the flows are assigned to paths based on the existing congestion on the links connected to the source TORs. In this scenario, source TOR 104a is connected to spine router 102a through link 108a and is connected to spine router 102b through link 108b, where it is assumed that link 108a to spine router 102a is less congested than link 108b to spine router 102b. Source TOR 104c is similarly connected to spine router 102a through link 108e and is connected to spine router 102b through link 108f. Link 108e between source TOR 104c and spine router 102a is assumed to be less congested than link 108f between source TOR 104c and spine router 102b.

For both TOR 104a and TOR 104c, each of them assigns the associated flows to the least congested link. In both cases (for TOR 104a and TOR 104c, in this example), the least congested link is the link to spine router 102a (i.e., links 108a and 108e). Consequently, each of servers 106a and 106e assigns the associated flows to respective paths that go through spine router 102a. If each of source servers 106a and 106e is generating sufficient data to cause TORs 104a and 104c to be transmitting near capacity on the respective links (108a, 108e) to spine router 102a, then the data that must be transmitted from spine router 102a to destination TOR 104b exceeds the capacity of the one downlink (i.e., downlink 108c in this example) that is available to transmit the flows. As a result, there will be congestion on downlink 108c and the transport performance of the flows will be reduced, causing the performance of the collective that this flow is a part of to be reduced which, ultimately, may cause the job or application performance to be reduced (e.g., the specific job or application requires the collective to finish in order to proceed).

Although not shown in the example of FIG. 3, there may likewise be scenarios in which uplinks are congested. For example, if two servers are generating flows for a collective, a TOR to which the servers are connected may assign the flows to the same uplink if, for instance, it is assigning flows by hashing the fixed header fields of a packet. If each of the flows requires more than half of the available uplink bandwidth, the collective requirements of the communication flows will be greater than the available bandwidth on the uplink and the link will become congested, reducing the transport performance of both flows.

Thus, in a leaf-spine topology, the uplinks out of a source TOR and the downlinks from the spine back to a destination TOR can both become congested. As noted above, this congestion slows down the network communication and thus adversely impacts the performance of the collective and, therefore, the application, even if the congestion only affects a small number of the flows for a collective due to the aforementioned tail-latency effect. It is therefore critically important that the flows are forwarded in a way that minimizes congestion in the network.

As noted above, these load-balancing problems are well-known and solutions have previously been attempted, but the previous solutions have a number of shortcomings. One attempted solution is load-sensitive flow placement where new flows from a switch are dynamically forwarded based on an observed state of local links with the flows placed on the least congested links at the time of forwarding or flow detection. The load balancing decision is made based on congestion local to the switch, and this approach does not avoid congestion for links beyond the first hop. Another solution is to implement flow spreading, where the packets of a single flow are distributed across all links that can be used to reach the destination, but this can cause packets to be received at the destination receiver out of order and, therefore, requires NIC support to avoid poor performance, as previously discussed.

The disclosed systems and methods for collective load balancing take advantage of the fact that collectives have many flows that are highly correlated in time. When each of these flows (that share a single collective) is properly pinned to communication links, it can be ensured that the collective traffic does not overload any of the links that its flow use. Moreover, if there are multiple simultaneous collectives and this approach is taken for all of them, then it is furthermore ensured that congestion is not created for any of the collectives by the flows of the collectives.

It is common for a single source TORto have multiple flows to the same destination TOR, where the flows are part of the same collective. These flows are typically all the same or nearly the same size, in terms of amount of data to transfer, due to the inherent symmetry that collective implementations create.

In the disclosed systems and methods, the flows that originate within a single source TOR toward a destination TOR and that are part of the same collective are forwarded so as to spread the flows evenly across all links out of the source TOR, which necessarily also balances the traffic for the collective from the spine routers back down to the destination TOR. All TORs in the network create this same symmetric distribution. As a result, the collective does not create congestion in the network. When multiple collectives generated in a network are forwarded according to this same approach, no collective creates or experiences congestion due to the thusly managed collective communication traffic.

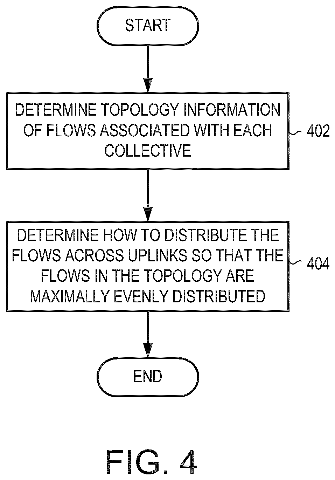

This solution, which is illustrated in FIG. 4, involves two parts: a first part (402) that involves determining the topology information of the flows that are associated with each collective; and a second part (404) that involves determining how to distribute the flows across the links so that the flows in the topology are maximally evenly distributed. This topology information includes source and destination information for the flows associated with a collective, and may further include some or all of: an indication or identifier that can be used to identify the same collective between servers, and some indication of the "shape" of the topology used by the collective. Examples of possible topological shapes can include rings, trees, and all-to-all or full-mesh.

In another embodiment, the flows may be evenly distributed or substantially evenly distributed across the links. For example, it may be that according to one even distribution of flows to uplinks, there are no more than 17 flows on any link. Whereas, in another distribution, the same set of flows may be pinned to links in a way that results in no more than 16 flows on any link. This latter distribution may be considered substantially evenly distributed. A maximally evenly distribution of flows is one in which no rearrangement of flows can result in a more even distribution according to some desirable metric - (such as the number of flows on any link, or the bandwidth used on any link). Whereas, one would generally strive for a maximally even distribution, for various practical reasons such as implementation complexity, processing time, storage cost, or the "online" nature of flow arrivals, it may not be feasible or cost-effective to produce a distribution that provides a maximally even distribution of flows to links in all cases. Accordingly, it will be understood by a person of skill in the art that a variant of the method previously described that assigns flows in a group to links in a method that approximates or approaches a maximally even distribution thereby providing an "even" or "substantially even," but not "maximally even" distribution, is also contemplated herein.

The topology information of the flows associated with each collective may be determined in at least two different ways.

In some cases, a collective communication library (e.g., an NVIDIA Collective Communication Library, or NCCL) may be used to orchestrate these collective communications for jobs such as AI training jobs that are distributed among multiple servers. In these cases, the subset of the topology information known by a server for each collective is essentially exported from the CCL of each participating server to that server's TOR. Topology information can be exported from not just one server to its TOR, but also from all servers involved in the collective to all of their respective TORs. The TOR then aggregates the topology information received from each server into aggregate topology information for each collective.

In some embodiments, flows can be exported as they are created from within a collective communication library (CCL) implementation. More specifically, the CCL implementations running on each participating server will determine multiple topology shapes and will create flows on each server for all connections in all the topology shapes. In one embodiment, for each collective, the topology information consisting of the flows, the topology shape or shapes that each of the flows in the set are associated with, and a unique identifier (ID) for the collective (e.g., a "collective ID") can be exported from the CCLs of the participating servers to their respective TORs.

In some embodiments, the CCLs can additionally or alternatively export an identifier (e.g., a "communicator ID") for a set of flows that can, in conjunction with other information, such as a topology shape for the set of flows, be used to infer a mapping from flows to collectives. Each communicator ID can be associated with multiple collective instances. This communicator ID can be used to stitch or aggregate the flows received from each server into a set of collective instances. The unique identifier can, in some cases, be used to determine that flows received from two different servers should be aggregated into information about a single collective. The TOR can then allocate the flows that are part of the same collective and send them toward the same destination TOR in an evenly distributed (e.g., round-robin) fashion across viable links to achieve the desired flow-spreading. The viable links are those uplinks that are determined, by for instance a routing protocol, to be usable to reach the destination TOR of the group.

In one embodiment, the topology information for a collective is exported by having the server initiate a communication toward the TOR and transmit one or more messages that encode the collective's topology information. In one embodiment, this communication is directed to a well-known address that has been configured in or learned by the server. In one embodiment the topology information is sent to the TOR from one originating connection or socket. In one embodiment, the server initiates a separate communication on each port that communicates the topology information including the flows that are exiting the server via that port. This embodiment is designed to address the case where a server may be connected to more than one TOR switch, as described above. In one embodiment, the messages are encoded in an RPC protocol such as gRPC or HTTP. In another embodiment, the topology information can be stored on the server and retrieved from the TOR via a well-known state access method such as gRPC or HTTP. In this embodiment the address on the server may be well-known by the TOR or may be negotiated between the server and the TOR.

In any of these embodiments, encryption may be used with negotiated or pre-configured keys to protect the authenticity and integrity of these transfers, as will be understood by one skilled in the art. In another embodiment the security of the transfers may be enhanced by requiring that the access be allowed only from a directly-connected neighbor. This may be achieved by using a non-forwardable layer two packet, by using the TTL security mechanism of RFC5082, or other methods as will be appreciated by one skilled in the art.

In cases in which the topology information cannot be exported from the CCL or MPI libraries, it can be determined by snooping the flows to identify the pattern of the flows as their constituent packets arrive at the TOR. Snooping, in one embodiment, refers generally to the process of sending packets to a control processor for analysis. This can be done via industry-established methods of monitoring traffic such as sFlow or IPFIX or other traffic sampling methods, or it can be done by installing intelligent snooping rules.

More specifically, the TOR can match and snoop only unprogrammed flows with multiple possible next hops that can be used to reach their destinations. An additional optimization can be made to further reduce the rate of snooped traffic by matching and snooping only the first packet in a flow. In one embodiment of this method, the flows consist of Remote Direct Memory Access (RDMA) traffic. RDMA refers to the direct access of memory of one computer by another in a network without involving an operating system on either of the computers. For RDMA write operations that are used to transfer data, the first packet of the RDMA write operations has a specific opcode - RDMA_WRITE_FIRST. Additionally, matching on this opcode in the switch's data path allows new flows to be sampled at far higher rates without overloading the control processor of the TOR (e.g., because TOR's central processing unit (CPU) or "slow path" sees a substantially reduced fraction of the packets).

A given server usually transmits the flows of only one collective at a time, but a given TOR may have multiple servers connected to it, and those servers may simultaneously participate in different collectives, so it is possible in a small interval of time for a single TOR to receive packets associated with at least as many collectives as it has attached servers. In cases where a server is transmitting multiple collectives at the same time, it will be the case where the percentage of transmission bandwidth allocated to any given flow within a collective is approximately equal across all flows for that collective (i.e., the proportion of a NIC's bandwidth dedicated to a collective is approximately equal across the flows associated with the collective). For instance, suppose 50% of transmission bandwidth is allocated to an "AllReduce" collective, then the flows for the AllReduce collective are communicated at the same (or roughly the same) reduced (50%) transmission rate.

Destination correlation at a first TOR (a source TOR) is achieved by analyzing and understanding how packets from each collective flow will be forwarded in the network. Flows originating from servers connected to a source TOR that will be forwarded through the same specific destination TOR are correlated in destination. Flows that are inferred (e.g., by snooping) or known (e.g., through CCL export) to come from the same collective and that are correlated in destination are grouped together. This approach is effective because flows from the same collective are inherently correlated in time. The destination correlation is done using the destination TOR and not the ultimate destination server port. If flows were grouped only by destination server port, there might not be sufficient flows in a group to balance those flows across all viable paths to the destination, and hence to evenly balance the traffic across the downlinks from the spine to the destination TOR. However, the viable paths at the source TOR are the same for any two flows destined to ports on the same destination TOR. And thus, it is desirable to group together all time-correlated flows sent via the same destination TOR in order to ensure that as many flows as possible are evenly distributed across the viable paths. Thus, flows for a collective that are correlated in both time and destination are grouped together. Some embodiments of the method disclosed herein can be applied at, e.g., a spine switch, so as to choose between multiple parallel links to the same destination switch.

In some embodiments, counters or hit-bits can be used to determine if a flow is active and/or age out the flow accordingly by an aging time limit. In one embodiment, the time since the last update of the counter or hit-bit can be compared against the aging time limit. The aging time limit can be configurable or set to a default value. As a non-limiting example, flows of the same collective may age out together at the same time.

The flows that are grouped together are evenly distributed across the viable links from the source TOR. (As above, the viable links for a destination are the ones determined to be usable to reach the destination.) Since the grouped flows are balanced across all of the viable links, there will necessarily be a symmetric distribution of the flows across the downlinks from the spine to the destination TOR. Even if flows in multiple groups or multiple collectives are active at the same time, the aggregate distribution of the flows will be balanced since each group's flows are balanced independently. Congestion caused by the flows can thereby be reduced or eliminated.

In practice, there are multiple ways to cause flows in a group to be forwarded according to the balanced distribution desired. One way is to program specific flow matching rules into the TOR hardware. These rules match the header fields of a specific flow and forward the flow to a specific link that is programmed for that flow to achieve a balanced distribution. Header fields matched on might include IP source address, IP destination address, protocol type, layer 4 ports, RDMA Queue Pair ID.

Another way to accomplish the balanced distribution of flows is to forward traffic based on known symmetry in the flows. For example, it is very common for all of the NICs from a single server to be transmitting to the corresponding NIC on a destination server. For example, if a server with 4 NICs is communicating with another server with 4 NICs, the first sender NIC may only send to the first receiver NIC, the second sender NIC may only send to the second receiver NIC, and so forth. A common server configuration used for AI training has eight NICs (for instance an NVIDIA DGX^{™} system). The collective library can be modified or configured to not use only a single flow but to use multiple flows for communications between a source server NIC and a destination server NIC.

By causing the sender to use an increased number of flows, this method guarantees that there are enough flows to evenly distribute all the flows of a group evenly across all viable links. These flows can be given a specific pattern, such as having all four unique values of the two least significant bits (LSBs) of the queue pair ID for ROCEv2 flows. The network can be programmed to match on an identifier associated with the incoming interface plus the two LSBs of the queue pair ID (or other identifier) and use this to influence the selection of the link in such a way so as not to require specific flow match entries to be installed for every flow.

Once the TOR has learned the topology information (and specifically the constituent flows) from its attached servers, it is necessary to determine how to group them such that the groups can be evenly distributed across links. Flows are classified into appropriate groups such that they are correlated in both time and destination. Time correlation is determined based upon the collective with which the flows are associated. Since the flows associated with the same collective will begin transmitting for a given communication pattern at nearly the same time and finish together even if they originate on different servers, they are temporally correlated.

Due to the inherent symmetry that communications libraries create, the flows of a collective are generally all the same or similar in size, and this method exploits this similarity to provide an even distribution. When flows are learned by snooping, the collective with which they are associated can be inferred, using one of several methods described below. In one embodiment, flows that share the same memory-key for a given destination or share a virtual address region for a DMA operation can be deduced to be part of the same collective. The memory-key and virtual address region are examples of fields in the snooped packets that can be used, in one embodiment, to determine to which collective a flow belongs.

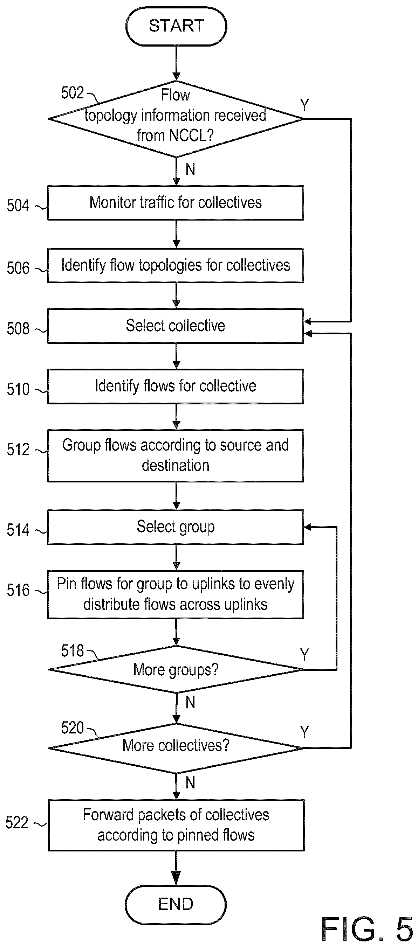

Referring to FIG. 5, a flow diagram is shown to illustrate a method for balancing communication flows in a network in accordance with some embodiments. The diagram is intended to be illustrative of the logical flow of the method implemented by a network switch (e.g., a TOR) and the specific implementation may vary from one embodiment to another.

At step 502, it is determined whether information on the communication flows associated with communication collectives that are run by servers connected to the switch is available to be imported directly from the applications performing the collectives (and generating the communication flows). As noted above, this information may, in some cases, be provided to the switch by the collective communication libraries that are used by the applications. If the information on the communication flows and topologies can be directly imported, the method proceeds to step 508. If this information cannot be directly imported from the applications, the method proceeds to step 504.

At step 504, the switch monitors the traffic that is being generated by the connected servers, and the traffic is examined to identify the topologies of the communication flows (step 506). For example, the flows of a collective may use a ring topology in which each server that is involved in the collective communication job sends data to a specific subsequent server. Considered together, all the flows of the collective then form a logical ring that includes all of the servers included in the job. In another instance, each server that is involved in a collective communication job may send its data to every other server in the job, which is an all-to-all topology. Still, other collectives may use tree topologies.

While a given server may perform only a single collective job at a time, there are typically multiple servers connected to the switch, and each of these servers may execute different jobs for different collectives. One or more of the servers may, alternatively, be involved in the same job as one or more of the other servers. Because the various servers connected to the network switch may be concurrently executing multiple jobs, the communication flows seen by the network switch may, at any given time, include flows for multiple different collectives, at the same time. The network switch identifies communication topologies for each of the communication collectives.

At step 508, the network switch selects one of the communication collectives. The network switch may not make an explicit selection of the collective but, as will be explained below, each of the collectives is examined to identify and group corresponding communication flows and to pin the communication flows to appropriate uplinks.

At step 510, the network switch identifies the communication flows that are associated with the selected collective. For each of the communication flows, a corresponding source and destination are determined. In particular, the network switch is concerned with the source and destination switches (e.g., TORs) between which the flows must be transmitted. Because the communication flows for the switch all originate at the switch, it is the source for each communication flow. The destination switch (e.g., TOR) is determined from information in the headers of each communication flow's packets. In this example embodiment, the allocation decision is made on the network switch. In other embodiments, the allocation decision logic can be implemented on a controller, in which case the assumption about sources being the same is no longer applicable.

At step 512, the network switch groups the communication flows for the collective according to the corresponding sources and destinations. For example, all of the communication flows that have switch A as a source and switch B as a destination are included in a first group, while all of the flows that have switch A as a source and switch C as a destination are included in a second group, and so on.

At steps 514-518, each of the flows of each group are pinned to corresponding uplinks. More specifically, the communication flows of a given group are evenly spread across the uplinks from the switch, with each flow pinned to a particular uplink. If the number of communication flows matches the number of uplinks, then each flow will be pinned to a corresponding one of the uplinks. If there are more or fewer communication flows than the number of uplinks, the network switch will distribute the flows among the uplinks as evenly as possible. Each communication flow will remain pinned to the corresponding uplink for as long as the job (of which the flow is a part) is being performed.

For example, if there are four communication flows in a group that has a source of switch A and a destination of switch B, then one of these flows will be pinned to each uplink. If the number of communication flows is not a multiple of the number of uplinks, the flows will be balanced to the extent possible. If, for example, there are seven communication flows in the group, the network switch will pin two flows to each of three uplinks, and will pin only one flow to the remaining uplink.

While the even spread of the communication flows across the uplinks is determined in the examples above based only on the number of flows in a group and the number of uplinks, the uplink assignments for the communication flows need not be determined entirely independently of the other groups. Consider the example in which there are seven communication flows in the group and one less flow is assigned to the last uplink. If the switch has already pinned the communication flows of another group to the uplinks, and the other group has five flows, the switch will have pinned two flows to one uplink, and one flow to each of the remaining three uplinks. The switch may consider this in determining which of the uplinks will be assigned the single flow in the seven-flow group. In this example, the uplink that has had two flows from the five-flow group may be assigned the single flow from the seven-flow group.

After each of the groups of flows in the collective has been considered and each of the communication flows in the groups has been pinned to a corresponding one of the uplinks, it is determined at step 520 whether there are any additional collectives that need to be considered. If there are additional collectives, the same process described above in steps 508-518 is repeated for each additional collective. After all of the flows for all of the collectives have been pinned to corresponding uplinks, the switch forwards received flows on the corresponding uplinks (step 522). Because the communication flows have been evenly spread across the uplinks, the flows are also necessarily spread evenly across the downlinks to the destination switches.

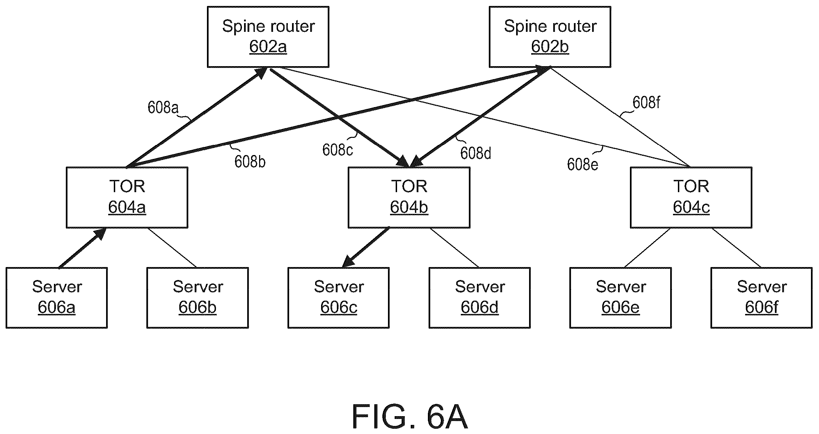

Referring to FIGS. 6A-6B, a set of diagrams illustrating the forwarding of communication flows after they have been evenly distributed across the available uplinks is shown. FIGS. 6A-6B show a set of spine routers 602, a set of TORs 604 and corresponding servers 606 which implement the leaf-spine topology described above with reference to FIGS. 1 and 3. Each of TORs 604 has an uplink to each of spine routers 602.

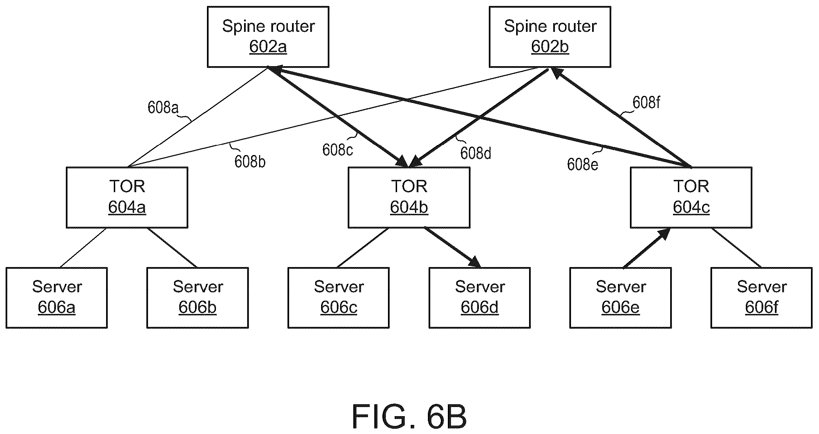

In this example, a first set of flows from a first source server 606a are forwarded to a destination server 606c and a second set of flows are forwarded from a second source server 606e to destination server 606d. This is similar to the example of FIG. 3, except that the flows are pinned to uplinks in a manner that spreads the flows across the uplinks. Processing of the first set of flows is described below with reference to FIG. 6A, while processing of the second set of flows is described below with reference to FIG. 6B.

Referring to FIG. 6A, the communication flows from source server 606a to destination server 606c are shown. When TOR 604a determines how to pin the flows of server 606a, it spreads the flows evenly across the available uplinks (608a, 608b), rather than pinning all of the flows to a single uplink (e.g., the least congested uplink). Because the flows from server 606a are forwarded on uplinks 608a and 608b to both spine router 602a and 602b, the flows are also evenly distributed on the downlinks (608c, 608d) from these spine routers to the destination TOR (604b). Since the flows are evenly distributed across downlinks 608c and 608d, congestion on the downlinks is avoided.

FIG. 6B shows the communication flows that originate at source server 606e and are forwarded to destination server 606d. TOR 604b identifies the communication flows, groups them and determines the uplinks to which the flows are pinned. TOR 604b spreads the communication flows evenly across the two available uplinks (608e, 608f),. Rather than pinning all of the flows to a single uplink (e.g., the least congested uplink). The flows from server 606e are forwarded on the uplinks (608e, 608f) to spine router 602a and spine router 602b and are, therefore, also evenly distributed on the downlinks (608c, 608d) from these spine routers to the destination TOR (604b). Again, the even distribution of the flows across downlinks 608c and 608d avoids congestion on the downlinks.

If the communication flows depicted in FIGS 6A and 6B are concurrent (e.g., if the jobs executed by servers 606a and 606e are part of the same collective), each of downlinks (608c, 608d) will carry approximately half of the flows generated by server 606a and approximately half of the flows generated by server 606e. The downlinks to TOR 604b will, therefore, avoid the congestion that occurs in a scenario such as the one illustrated in FIG. 3, where all of the flows of the two servers are forwarded on one of the downlinks (108c).

While embodiments described herein have been described with respect to a limited number of embodiments, those skilled in the art, having the benefit of this detailed description, will appreciate that other embodiments can be devised which do not depart from the scope of embodiments as disclosed herein.

Variations of the disclosed embodiments include, for example, one embodiment comprises a network switch having a processor, a plurality of server ports and a plurality of ports. The server ports are adapted to receive communication flows from one or more source devices and the ports adapted to couple the network switch to corresponding network communication links. The processor is adapted to obtain information for communication flows of one or more communication collectives. The processor then determines, for each communication collective, a corresponding set of the communication flows and ports that are part of the same communication collective. This determination allows the processor to treat the flows of the ports in the communication collective together.

Finding ports belonging to the same communication collective can be done by, for example, determining what ports are part of the same server or job, by checking whether these ports are communicating with each other. In one embodiment, the determination as to whether ports are communicating with each other can be performed by a control processor that receives a random or selected sample of the traffic. For example, sFlow or other sampling approaches can direct traffic to the CPU in a way that would be known to one skilled in the art. Another approach is to examine the first packet in each flow or in a subset of flows by configuring an appropriate data plane filter to redirect such packets to a control processor for examination. This enables identifying the flows without the control plane burden of receiving all traffic. In another approach, counters may be maintained by the data plane that can be used to determine which ports are communicating with which other ports or how much traffic each flow is carrying. In one implementation this information may be maintained in a hardware table. In one implementation, these counters may consist of counters that record packets sent from port A and received by port B.

For each communication collective, the processor pins the communication flows that have a choice of output paths. The communication flows that do not have a choice of output paths (e.g., those that are destined to hosts directly connected to the switch) do not need to be pinned. For instance, the processor may pin a subset of the communication flows of the corresponding set of communication flows to a corresponding one of the output ports for transmission on the corresponding communication links according to a corresponding flow distribution. For each group of flows of the collective that have been determined to be correlated in time and in destination and where the destination is reachable via a set of output ports, the corresponding flow distribution evenly distributes the communication flows of the group across a set of the output ports.

In some embodiments, the processor is adapted to obtain information for at least a first communication collective and a second communication collective, wherein a first flow topology of the first communication collective is independent of a second flow topology of the second communication collective. The network switch may pin communication flows of only a single one of the one or more communication collectives at a time, or it may pin communication flows of multiple communication collectives at the same time.

The network switch may obtain information for the communication flows of the one or more communication collectives by importing the information for the flows of the one or more collectives from an application that orchestrates the flows of the one or more collectives. As discussed above, the network switch may alternatively obtain information for the communication flows of the one or more communication collectives by monitoring the communication flows of each of the communication collectives and identifying the flow topology corresponding to each communication collective. For each communication collective, the network switch transmits all corresponding communication flows according to a single corresponding flow distribution.

In some embodiments, the network switch comprises a TOR which is connected to a set of servers, where the communication flows are generated by the servers and where each server generates flows for a single one of the communication collectives at a time. Each server generates flows for a single one of the communication collectives at a time, but may generate flows for multiple communication collectives at alternate times. In some embodiments, at least a first communication collective contains communication flows of a plurality of groups, the flows of each group having a corresponding common source and a corresponding common destination, and the flows of each group being evenly distributed across a corresponding set of the output ports.

Another alternative embodiment comprises a method for transmitting communication flows. The method includes a network switch obtaining information for communication flows of one or more communication collectives and determining, for each of the collectives, a corresponding set of the communication flows and a corresponding flow topology. The network switch then determines one or more groups of the flows for each collective, where the flows in each group have a common source and a common destination for a group of flows of the collective that have a common source and a common destination and pins each of the flows to a corresponding network link, where communication flows in each group are distributed evenly across the set of links from the network switch to the network.

In some cases, due to data plane resource limitations, a TOR may not be able to program forwarding rules for all of the flows that it has learned. For instance, the TOR may not be able to match all of the flows that it has learned with a next hop destination because the table where the next hop destination is stored does not have enough available entries to program all flows.

As a fallback in case of such hardware exhaustion, the TOR can be configured to modify a field that influences the forwarding priority of packets belonging to the unknown flows. One such modification is a Differentiated Services Code Point (DSCP) rewrite rule(s) for modifying a "traffic" class of a packet and/or modifying the DSCP of a packet. This allows the TOR to prioritize flows that it has programmed over those that have not been programmed, possibly because the table where flow matching rules are programmed is full. In one embodiment the data structure used for flow matching is a Ternary Content Addressable Memory (TCAM).

In another embodiment, it may be a dedicated exact match table implemented as a hash table or other lookup table. The result of applying a DSCP rewrite or other forwarding priority modification is that the TOR can prevent collectives which generate larger numbers of flows from interfering with the performance of other collectives that do fit within the data plane flow limit. One specific type of collective that can generate large numbers of flows is all-to-all (A2A) collectives. DSCP rewrite and TCAM are known to those skilled in the art and thus are not further described herein.

It should be noted that the salient aspects of the method can be performed by modifying any field that influences the forwarding priority of the packet - such as the Ethemet Class of Service, Type of Service, or MPLS EXP. Note that in one embodiment it is not necessary to change any marking on the packet but to simply select a different "traffic class" or quality of service class for the packet that is used locally to determine forwarding priority, as would also be known to one skilled in the art. By modifying a field in the header, such as the DSCP value, this prioritization applies at all subsequent nodes in the network path, and is not just applied locally. In one embodiment, when there are insufficient data path resources to program all flows from all learned groups, preference may be given to programming the data plane with flows from groups associated with collectives that do not generate large numbers of flows. For instance, it may be desirable to preferentially program flows associated with AllReduce collectives over AllToAll collectives, if the collective type can be determined by examining captured packets or by inferring from packet properties such as the RDMA write size, as described above. In another embodiment it may be desirable to preferentially program the flows from groups that have fewer associated flows, or fewer associated flows per port.

In some embodiments, the network switch comprises a TOR that receives the communication flows from servers connected to the TOR and forwards the flows on the corresponding network links to which the flows are pinned. For each communication collective, all corresponding communication flows are forwarded according to a single corresponding flow distribution that is used for the duration of the job for which the flows are generated.

The information obtained by the network switch includes information for at least a first collective and a second collective, where the flow topology of the first collective is independent of the flow topology of the second collective. Obtaining the information for the communication flows of the collectives may comprise importing the information for the flows from an application that orchestrates the flows of the collectives. Alternatively, the information for the flows of the collectives may be obtained by monitoring the communication flows of each of the communication collectives and identifying the flow topology corresponding to each collective from the monitored flows.

The method may include receiving packets of the communication flows and forwarding the received packets on ones of the links to which the corresponding flows are pinned. The communication collectives may comprise a plurality of collectives, where at any point in time, communication flows of multiple ones of the collectives are forwarded on the plurality of links.

Yet another alternative embodiment may comprise a computer program product including a non-transitory computer-readable medium which stores instructions that are executable by one or more processors to perform a method that includes obtaining information for flows of one or more collectives, determining a corresponding set of the communication flows and a corresponding flow topology for each of the collectives, determining groups of flows for each collective where the flows in each group have a common source and a common destination, and pinning each of the flows to a corresponding one of a plurality of network links from the network switch, where the flows in each group are distributed evenly across the links. The instructions may be further executable to cause the processors to receive the flows from one or more servers and forward the flows on the corresponding network links to which the flows are pinned.

According to various embodiments, there are multiple methods for grouping flows into collectives. One property of some CCLs is that they will often use different sizes of writes for different collectives. For instance, in an ROCE RDMA write, the RDMA_WRITE_FIRST packet contains the RDMA write size of a given operation. Thus, in some embodiments, flows can be grouped together only if they are using the same RDMA write sizes. In this case, RDMA write size can be determined by intercepting RDMA_WRITE_FIRST packets and directing them to the processor for inspection, or by directly capturing the write size field and presenting it to or storing it for the CPU to access along with the associated flow.

As will be appreciated by one skilled in the art, a similar approach can be used for any collective in which the size of the transfer used by the collective can be determined by intercepting or snooping on a packet that contains or implies the size of the transfer.

In other embodiments, once a TOR has learned a flow, it can count how many packets have been transmitted on a flow during an interval of time. From this information the TOR can update the flow groupings to group flows together only if they have the same (or nearly the same) number of packets during the same (or nearly the same) interval of time.

In yet other embodiments, grouping of flows can be accomplished in many other ways. For instance, grouping of ROCE (RDMA over Converged Ethernet) flows can be done based on flows that have similar memory information in the InfiniBandTM (IB) RDMA Extended Transport Header (RETH), such as the same remote key, virtual address, etc. Flows that contain the same memory-key or virtual address region for a single destination can all be determined to be part of the same collective as they are writing the same memory region at the destination host.

Additionally, the size of the destination memory buffer can be determined by watching the Virtual Address across packets. Given collectives will use different sized buffers, which can be detected by examining the size of the Virtual Address base plus write offset. For example, All-reduce flows may use a region of 4mB, while allToall flows may only use a 1mB buffer.

When in a monitor mode, the grouping of flows is still exposed to the user. However, the destination of the flow is not changed. This allows visibility into what specific types of traffic are in the network. Moreover, it can be used to evaluate the performance of the flow grouping algorithms to ensure they will perform as expected before being enabled. In the monitor mode, the tools, APIs, and user commands for viewing the flows function the same as when not in the monitor mode. Flows will be counted and aged. Their groupings are displayed. The overflow rules are still hit, but they only count overflow packets and do not change the quality of service for these packets.

It will be understood that while specific embodiments have been presented herein, these embodiments are merely illustrative, and not restrictive. Rather, the description is intended to describe illustrative embodiments, features and functions in order to provide an understanding of the embodiments without limiting the disclosure to any particularly described embodiment, feature or function, including any such embodiment feature or function described. While specific embodiments of, and examples for, the embodiments are described herein for illustrative purposes only, various equivalent modifications are possible within the spirit and scope of the disclosure, as those skilled in the relevant art will recognize and appreciate.

As indicated, these modifications may be made in light of the foregoing description of illustrated embodiments and are to be included within the spirit and scope of the disclosure. Thus, while particular embodiments are described, a latitude of modification, various changes and substitutions are intended in the foregoing disclosures, and it will be appreciated that in some instances some features of embodiments disclosed herein will be employed without a corresponding use of other features, and features described with respect to one embodiment may be combined with features of other embodiments without departing from the scope and spirit of the disclosure as set forth herein. Accordingly, the scope of embodiments described herein should be limited only by the attached claims.

The disclosure in the application also includes the following numbered clauses:
1. A network switch, comprising:
   a first set of ports adapted to couple the network switch to source devices over a network;
   a second set of ports adapted to couple the network switch to network links;
   a processor;
   a non-transitory computer readable-medium; and
   instructions stored on the non-transitory computer readable-medium and translatable by the processor for:
      determining communication flows from communication collectives on the network;
      for all of the communication flows, determining groups of flows, wherein the communication flows in each respective group of the groups are correlated in time and in destination;
      for each respective group, pinning each communication flow in the respective group to a corresponding network link so that the communication flows in the respective group are evenly distributed across the network links; and
      sending the communication flows toward the network links as pinned.
2. The network switch of clause 1, wherein each communication flow refers to a subset of communication traffic transmitted from a source node to a destination node for a job and wherein a communication collective includes one or more communication flows between a pair of nodes.
3. The network switch of clause 1, further comprising:
   matching, based on rules built into the network switch, header fields of a communication flow to a specific one of the network links that is programmed for the communication flow so as to achieve a balanced distribution, wherein the network links are uplinks or downlinks.
4. The network switch of clause 1, wherein the instructions are further translatable by the processor for:
   importing topology information of the communication flows from one or more of the source devices;
   aggregating the topology information of the communication flows imported from each of the source devices into aggregate topology information for each of the communication collectives; and
   grouping the communication flows using the aggregate topology information.
5. The network switch of clause 4, wherein the topology information of the communication flows contains a topology shape for each communication flow in a corresponding communication collective and a unique identifier for the corresponding communication collective.
6. The network switch of clause 1, wherein the instructions are further translatable by the processor for:
   receiving a communicator identifier and a topology shape for a set of communication flows; and
   inferring, utilizing the communicator identifier and the topology shape, a mapping from the set of communication flows to one or more communication collectives, wherein the mapping is used to determine the groups of flows that are correlated in time and in destination.
7. The network switch of clause 1, wherein the instructions are further translatable by the processor for:
   receiving a set of communication flows from different source devices;
   determining, based on a communicator identifier associated with the set of communication flows, whether the communication flows should be aggregated into information about a single communication collective, the communicator identifier associated with multiple collective instances;
   allocating, based on a routing protocol, communication flows in the single communication collective to a subset of the second set of ports; and
   sending the communication flows in the single communication collective to a destination through the subset of the second set of ports.
8. The network switch of clause 1, wherein the instructions are further translatable by the processor for:
   snooping the communication flows from the source devices to identify a pattern of the communication flows as their constituent packets arrive at the network switch; and
   grouping the communication flows based on the pattern of the communication flows thus identified such that grouped communication flows come from same collective and are correlated in destination.
9. The network switch of clause 8, wherein the communication flows from the source devices consist of Remote Direct Memory Access (RDMA) traffic.
10. The network switch of clause 9, wherein the RDMA traffic comprises RDMA messages, wherein a first packet of each RDMA message contains an indication that it is a start of a message, wherein the snooping comprises snooping only the first packet of each message to obtain information about a flow for grouping the flow.
11. The network switch of clause 1, wherein the communication flows in the respective group are maximally evenly distributed across the network links.
12. A method, comprising:
   receiving, by a top-of-rack (TOR) switch from source devices, communication flows for communication collectives;
   determining, by the TOR switch, topology information of the communication flows;
   for each of the communication collectives, determining, by the TOR switch, groups of communication flows, wherein the communication flows in each respective group are correlated in time and in destination;
   for each respective group, pinning, by the TOR switch, each communication flow in the respective group to a corresponding network link connected to the TOR switch so that the communication flows in the respective group are evenly distributed across network links connected to the TOR switch; and
   sending, by the TOR switch, the communication flows toward the network links as pinned.
13. The method according to clause 12, wherein each communication flow refers to a subset of communication traffic transmitted from a source node to a destination node for a job and wherein a communication collective includes one or more communication flows between a pair of nodes.
14. The method according to clause 12, wherein determining the groups of communication flows comprises matching, based on rules built in to the network switch, header fields of a communication flow to a specific one of the network links that is programmed for the communication flow so as to achieve a balanced distribution, wherein the network links are uplinks or downlinks.
15. The method according to clause 12, further comprising:
   importing the topology information of the communication flows from one or more of the source devices;
   aggregating the topology information of the communication flows imported from each of the source devices into aggregate topology information for each of the communication collectives; and
   grouping the communication flows using the aggregate topology information.
16. The method according to clause 12, wherein the topology information of the communication flows contains a topology shape for each communication flow in a corresponding communication collective and a unique identifier for the corresponding communication collective.
17. The method according to clause 12, further comprising:
   receiving a communicator identifier and a topology shape for a set of communication flows; and inferring, utilizing the communicator identifier and the topology shape, a mapping from the set of communication flows to one or more communication collectives, wherein the mapping is used to determine the groups of flows that are correlated in time and in destination.
18. The method according to clause 12, further comprising:
   receiving a set of communication flows from different source devices;
   determining, based on a communicator identifier associated with the set of communication flows, whether the communication flows should be aggregated into information about a single communication collective, the communicator identifier associated with multiple collective instances;
   allocating, based on a routing protocol, communication flows in the single communication collective to a subset of the second set of ports; and
   sending the communication flows in the single communication collective to a destination through the subset of the second set of ports.
19. The method according to clause 12, further comprising:
   snooping the communication flows from the source devices to identify a pattern of the communication flows as their constituent packets arrive at the network switch; and
   grouping the communication flows based on the pattern of the communication flows thus identified such that grouped communication flows come from same collective and are correlated in destination.
20. The method according to clause 12, wherein communication flows that share same memory-key for a given destination or share a virtual address region for a Remote Direct Memory Access (RDMA) operation can be deduced to be part of same collective.
21. The method according to clause 12, further comprising:
   determining which ports are communicating with which other ports based on counters that record packets sent from a first port and received by a second port; and
   grouping a subset of the communication flows flowing between the first port and the second port.
22. A method, comprising:
   at a network switch operating in a monitor mode:
   determining communication collectives on a network and communication flows that comprise the communication collectives; and
   providing visibility of the communication flows and the communication collectives by determining groups of flows that are correlated in time and in destination.
23. The method according to clause 22, wherein the providing visibility of the communication collectives includes providing visibility of a topology shape of the communication collectives.

## Claims

1. A method, comprising:
receiving, by a network device from source devices, communication flows for communication collectives;
for each of the communication collectives, determining, by the network device, groups of communication flows, wherein the communication flows in each respective group are correlated in time and in destination;
for each respective group, pinning, by the network device, each communication flow in the respective group to a corresponding network link connected to the network device so that the communication flows in the respective group are evenly distributed across network links connected to the network device; and
sending, by the network device, the communication flows toward the network links as pinned.

2. The method according to claim 1, wherein each communication flow refers to a subset of communication traffic transmitted from a source node to a destination node for a job and wherein a communication collective includes one or more communication flows between a pair of nodes.

3. The method according to claim 1 or claim 2, wherein determining the groups of communication flows comprises matching, based on rules built in to the network device, header fields of a communication flow to a specific one of the network links that is programmed for the communication flow so as to achieve a balanced distribution, wherein the network links are uplinks or downlinks.

4. The method according to any preceding claim, further comprising:
determining, by the network device, topology information of the communication flows.

5. The method according to claim 4, further comprising:
importing the topology information of the communication flows from one or more of the source devices;
aggregating the topology information of the communication flows imported from each of the source devices into aggregate topology information for each of the communication collectives; and
grouping the communication flows using the aggregate topology information.

6. The method according to claim 4 or claim 5, wherein the topology information of the communication flows contains a topology shape for each communication flow in a corresponding communication collective and a unique identifier for the corresponding communication collective.

7. The method according to any preceding claim, further comprising:
receiving a communicator identifier and a topology shape for a set of communication flows; and
inferring, utilizing the communicator identifier and the topology shape, a mapping from the set of communication flows to one or more communication collectives, wherein the mapping is used to determine the groups of flows that are correlated in time and in destination.

8. The method according to any preceding claim, further comprising:
receiving a set of communication flows from different source devices;
determining, based on a communicator identifier associated with the set of communication flows, whether the communication flows should be aggregated into information about a single communication collective, the communicator identifier associated with multiple collective instances;
allocating, based on a routing protocol, communication flows in the single communication collective to a subset of the second set of ports; and
sending the communication flows in the single communication collective to a destination through the subset of the second set of ports.

9. The method according to any preceding claim, further comprising:
snooping the communication flows from the source devices to identify a pattern of the communication flows as their constituent packets arrive at the network switch; and
grouping the communication flows based on the pattern of the communication flows thus identified such that grouped communication flows come from same collective and are correlated in destination.

10. The method according to claim 9, wherein the communication flows from the source devices consist of Remote Direct Memory Access (RDMA) traffic.

11. The method according to claim 10, wherein the RDMA traffic comprises RDMA messages, wherein a first packet of each RDMA message contains an indication that it is a start of a message, wherein the snooping comprises snooping only the first packet of each message to obtain information about a flow for grouping the flow.

12. The method according to any preceding claim, wherein the communication flows in each respective group are maximally evenly distributed across the network links.

13. The method according to any preceding claim, wherein communication flows that share same memory-key for a given destination or share a virtual address region for a Remote Direct Memory Access (RDMA) operation are deduced to be part of same collective.

14. The method according to any preceding claim, further comprising:
determining which ports are communicating with which other ports based on counters that record packets sent from a first port and received by a second port; and
grouping a subset of the communication flows flowing between the first port and the second port.

15. A network device, comprising:
one or more processors;
a non-transitory computer readable-medium; and
instructions stored on the non-transitory computer readable-medium which, when executed by the one or more processors, cause the one or more processors to perform a method according to at least one of claims 1 to 14.
